# EUROPÄISCHE PATENTSCHRIFT

(11) **EP 3 482 625 B1**
(45) Veröffentlichungstag und Bekanntmachung des Hinweises auf die Patenterteilung: **23.02.2022**
(21) Anmeldenummer: 18204623.5
(22) Anmeldetag: 06.11.2018
(51) Int. Cl.: A01F 15/07

(54) **LEITEINRICHTUNG UND BALLENPRESSE**
GUIDE DEVICE AND BALING PRESS
DISPOSITIF DE GUIDAGE ET PRESSE À BALLES

(30) Priorität: 08.11.2017 DE 102017219868
(43) Veröffentlichungstag der Anmeldung: 15.05.2019
(73) Patentinhaber: Deere & Company, Moline, IL 61265 (US)
(72) Erfinder: Gresset, Pascal, 68163 Mannheim (DE); Repecaud, Romain, 68163 Mannheim (DE); Dutertre, Matthieu, 68163 Mannheim (DE)
(74) Vertreter: Stein, Stefan

(56) Entgegenhaltungen:
- EP-A1- 0 253 252
- DE-A1- 4 426 034
- US-A- 4 969 315

## Beschreibung

Die vorliegende Erfindung betrifft eine wenigstens ein Pressmittel aufweisende landwirtschaftliche Ballenpresse zur Bildung rundzylindrischer Pressballen, mit einer Leiteinrichtung mit wenigstens einem sich zumindest bereichsweise entlang des Pressmittels erstreckenden Leitmittel zum Heranführen eines Hüllmaterials an das Pressmittel, wobei das Leitmittel mit einem Rahmen der Ballenpresse einstellbar verbindbar ist, und wobei das Leitmittel über wenigstens zwei federnd vorgespannte Lagermittel an dem Rahmen aufnehmbar ist.

Bekannte Leiteinrichtungen sind vorgesehen, um ein Hüllmaterial in Anlage an bzw. mit einem Pressmittel einer Ballenpresse zu halten bzw. das Hüllmaterial an ein Pressmittel und/oder einen Pressballen heranzuführen. Derartige Ballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen. US 4,969, 315 A offenbart eine Vorrichtung zum Zuführen von Hüllmaterial an den Einlass einer Ballenkammer einer Rundballenpresse zum Umhüllen eines zylindrischen Ballens.

Derartige herkömmliche Leiteinrichtungen weisen meist ein, häufig als ein Blechteil und/oder in der Art eines Rostes ausgebildetes Leitmittel auf, das in vielen Fällen einenends schwenkbar und in einem weiteren Bereich derart verstellbar gelagert ist, dass ein Abstand zwischen dem Leitmittel und dem Pressmittel abhängig von den jeweiligen Einsatzbedingungen veränderbar ist. So kann beispielsweise bei nassem Erntegut ein größerer Abstand vorgesehen sein, um ein Blockieren der Zufuhr des Hüllmaterials durch sich anhaftendes Erntegut zu vermeiden. Üblicherweise ist das Leitmittel einenends gelenkig an einem Rahmen der Ballenpresse angeschlossen und kann um das Gelenk verschwenkt werden. Insbesondere bei wechselnden Einsatzbedingungen kann es bei derartigen Leiteinrichtungen zu einer schlechten bzw. unvollständigen Förderung und/oder zu einem Blockieren des Hüllmaterials kommen.

Die der Erfindung zugrunde liegende Aufgabe wird daher darin gesehen, eine Leiteinrichtung vorzusehen, durch welche die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Diesbezüglich weist eine Leiteinrichtung für eine wenigstens ein Pressmittel aufweisende landwirtschaftliche Ballenpresse zur Bildung rundzylindrischer Pressballen nach dem Stand der Technik wenigstens ein sich zumindest bereichsweise entlang des Pressmittels erstreckendes Leitmittel zum Heranführen eines Hüllmaterials an das Pressmittel auf, wobei das Leitmittel einstellbar mit einem Rahmen der Ballenpresse verbindbar ist, derart, dass entweder ein Abstand zwischen dem Leitmittel und dem Pressmittel und/oder eine Anpress- und/oder Vorspannkraft, welche das Leitmittel auf das Pressmittel aufbringt bzw. welche auf das Leitmittel wirkt, veränderbar bzw. einstellbar ist. Da das Leitmittel an dem Rahmen über wenigstens zwei federnd vorgespannte Lagermittel aufnehmbar ist kann das Leitmittel sich selbsttätig an Umgebungseinflüsse anpassen, insbesondere kann das Leitmittel flexibel, insbesondere über seine gesamte Erstreckung bzw. bereichsweise auslenken, wenn sich in dem Bereich zwischen dem Leitmittel und dem Pressmittel Material, insbesondere Erntegut bzw. Erntegutreste und/oder Verunreinigungen ansammeln und/oder solche an dem Pressmittel anhaften.

Sind die Lagermittel zumindest bezogen auf eine Längsachse der Ballenpresse und/oder eine Förderrichtung des Hüllmaterials beabstandet, so begünstigt dies die Bewegungsmöglichkeiten des Leitmittels. Beispielsweise kann eine Störung zuerst in einem rückwärtigen Bereich des Leitmittels bzw. der Ballenpresse auftreten, wenn eine Anhaftung oder Material hier durch das Pressmittel oder das Hüllmaterial in den Wirkungsbereich des Leitmittels eingebracht wird. Das Leitmittel kann nun der Störung zuerst in diesem rückwärtigen Bereich ausweichen, insbesondere in dem das entsprechende Lagermittel ein Ausweichen des Leitmittels erlaubt, und in einem beispielsweise bezogen auf die Förderrichtung und/oder die Ballenpresse weiter vorn gelegenen Bereich bzw. einem Mittenbereich ausweichen bzw. auslenken, wenn die Störung in diesen Bereich gelangt bzw. auf diesen einwirkt, dies insbesondere in dem das entsprechen Lagermittel nun auch alternativ oder zusätzlich ein Ausweichen des Leitmittels in dem entsprechenden Bereich erlaubt. Der beschriebene Bewegungsablauf ist nur beispielhaft zu verstehen; für den Fachmann sind vielerlei Bewegungsmuster sofort ersichtlich.

Besonders günstig ist es, wenn wenigstens ein Lagermittel zumindest ein Federmittel aufweist, welches das Leitmittel in Richtung des Pressmittels vorspannt bzw. belastet. Das Federmittel ist in der Art einer Druckfeder und/oder einer Zugfeder ausgebildet oder weist eine solche auf. Es kann vorgesehen sein, dass beide Lagermittel als eine Druckfeder oder eine Zugfeder ausgebildet sind oder eine solche aufweisen; besonders günstig ist es aber, wenn das Leitmittel einenends durch eine Druckfeder und andernends durch eine Zugfeder belastet wird.

Erfindungsgemäss sind mehrere Leitmittel vorgesehen sind, die unabhängig voneinander gelagert sind bzw. jeweils zwei Lagermittel aufweisen. Auf diese Weise kann beispielsweise nur eines bzw. nicht alle Leitmittel einer Materialansammlung bzw. -anlagerung ausweichen bzw. aufgrund einer solchen auslenken, wobei die übrigen Leiteinrichtungen weiterhin das Hüllmaterial in Anlage mit dem Pressmittel halten können. Darüber hinaus ist so ein Ersetzen und/oder Montieren/Demontieren auch nur einzelner Leitmittel möglich.

Vorzugsweise erstreckt/erstrecken sich das bzw. die Leitmittel zumindest im Wesentlichen parallel zu einer Längsachse der Ballenpresse und/oder in einer üblichen Förderrichtung des Hüllmaterials. Auf diese Weise kann das Leitmittel das Hüllmaterial über einen möglichst großen Bereich an das Pressmittel heranbringen bzw. ein Erfassen bzw. eine Förderung des Hüllmaterial durch das Pressmittel besonders gut und/oder über einen besonders großen Bereich unterstützen.

Besonders günstig ist es, wenn wenigstens ein Führungselement zur Führung des/der Leitmittel(s), insbesondere in Vertikalrichtung und/oder senkrecht zu dem Pressmittel vorgesehen ist. Eine derartige Führung kann Teil eines der oder beider Lagermittel sein und/oder diese/dieses in seiner/ihrer Funktion unterstützen.

Es ist denkbar, dass das/die Leitmittel an einer beliebigen Stelle im bzw. am Pressraum angeordnet ist/sind. Vorzugsweise ist das Leitmittel im Betrieb aber zumindest im Wesentlichen unterhalb des Pressballens angeordnet.

Führt/Führen das/die Leitmittel das Hüllmaterial an eine dem Pressballen abgewandte Seite des Pressmittels heran, so kann das ein Ergreifen und/oder Fördern des Hüllmaterials durch das Pressmittel begünstigen. Wird das Hüllmaterial der Ballenpresse in einem einer Aufnahmevorrichtung zugewandten Bereich des Pressraums zwischen dem Pressmittel und einer insbesondere stationären Rolle an den Pressballen herangeführt, so begünstigt dies ebenfalls die Zufuhr bzw. Förderung des Hüllmaterials durch das Pressmittel.

Dass Pressmittel kann als eine Pressrolle oder in jeder anderen Art und Weise ausgebildet sein. Besonders günstig ist es aber, wenn das Pressmittel als ein endloses Pressmittel insbesondere in der Art eines oder mehrerer, zumindest annähernd parallel zu einer Längsrichtung der Ballenpresse umlaufenden/r Gurte ausgebildet ist und/oder ein/solches aufweist.

Wird eine Ballenpresse mit wenigstens einer oder auch mehreren derartigen Leiteinrichtung ausgestattet, kann dies die Funktion der Ballenpresse, bzw. insbesondere einen Umhüllungsvorgang, während dem ein Pressballen in einem Pressraum der Ballenpresse nach Abschluss eines Ballenbildungsvorgangs mit einem Hüllmaterial umhüllt wird, unterstützen. Die Leiteinrichtung kann dazu beitragen, dass das Hüllmaterial gleichmäßig und/oder ohne Störungen an den Pressballen herangeführt wird. Hierzu kann die Leiteinrichtung mit dem Pressmittel derart zusammenwirken, dass die Leiteinrichtung das Hüllmaterial in Anlage mit dem Pressmittel hält, so dass dieses das Hüllmaterial ergreifen und/oder eine Förderung des Hüllmaterials in Richtung des Pressballens bzw. des Pressraums unterstützen kann. Bei der Ballenpresse kann es sich um eine industrielle Presse, beispielsweise eine Presse zur Bildung von Pressballen aus Materialien, wie etwa Papier, Abfall, Textilien etc. handeln. Insbesondere ist die Ballenpresse aber als eine landwirtschaftliche Ballenpresse zur Bildung rundzylindrischer Pressballen ausgeführt. Dies im Besonderen, wenn das Pressmittel als ein endloses Pressmittel, beispielsweise in der Art eines Pressriemens bzw. -gurtes ausgebildet ist oder ein(en) solches/en aufweist. Bei der Ballenpresse handelt es sich insbesondere um eine landwirtschaftliche Ballenpresse zur Bildung rundzylindrischer Ballen. Es ist auch eine Verwendung an einer Presse zur Bildung quaderförmiger oder sonstiger Ballen denkbar.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Ballenpresse in Seitenansicht mit einer in einem unteren Bereich der Ballenpresse angeordneten Leiteinrichtung,
- Fig. 2: eine vergrößerte Darstellung des unteren Bereichs,
- Fig. 3a-c: eine vergrößerte Darstellung eines rückwärtigen Bereichs der Leiteinrichtung mit rückwärtigen Lagermitteln von bezogen auf die Ballenpresse betrachtet rückwärts, vorne und unten betrachtet und
- Figur 4a-c: eine vergrößerte Darstellung eines Mittenbereichs der Leiteinrichtung mit weiteren Lagermitteln von bezogen auf die Ballenpresse betrachtet rückwärts, in einer weiteren Vergrößerung von rückwärts und von vorne betrachtet.

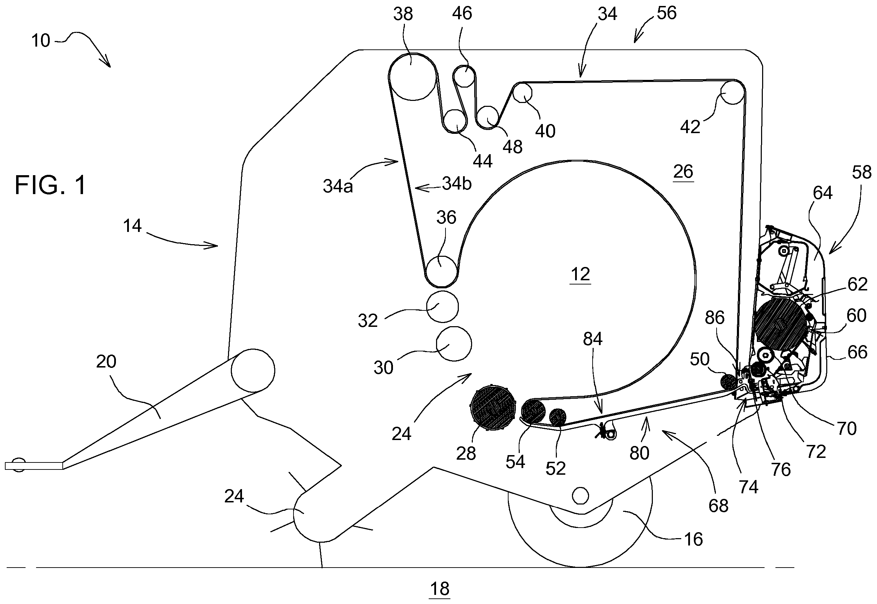

In der Figur 1 der Zeichnung wird eine schematisch dargestellte Ballenpresse 10, in der Art einer landwirtschaftlichen Rundballenpresse zum Pressen eines rundzylindrischen Pressballens 12 gezeigt, welche einen Rahmen 14 aufweist, der sich mittels Rädern 16 auf einem Untergrund 18 abstützt und die mittels einer Deichsel 20 an ein Zugfahrzeug, z. B. einen nicht gezeigten Ackerschlepper, anschließbar ist.

An einer bezogen auf eine Vorwärtsfahrtrichtung vorderen, unteren Seite des Rahmens 14 befindet sich in bekannter Weise eine Aufnahmevorrichtung 22 zur Aufnahme und Zufuhr von Erntegut, die geschnittenes Erntegut über einen Einlass 24 in einen Pressraum 26 fördert.

Am Einlass 24 des Ballenpressraums 26 sind eine untere, stationäre Rolle 28 und zwei obere Rollen 30, 32 positioniert. Der Ballenpressraum 26 wird weiterhin durch ein endloses Pressmittel 34 gebildet, das gemäß der vorliegenden Ausführungsform in der Art nebeneinander anliegender Pressriemen ausgeführt ist und um eine Anzahl von ortsfesten Walzen 36, 38, 40, 42 und bewegbaren Walzen 44, 46, 48, 50, 52, 54 geführt wird. Das Pressmittel 34 weist eine dem Rahmen 14 zugewandte Außenseite 34a und eine Innenseite 34b auf.

Während der Ballenpressraum 26 umfangsseitig im Wesentlichen von dem Pressmittel 34 und den Rollen 28, 30 und 32 umgeben wird, wird er seitlich von nicht gezeigten Seitenwänden begrenzt.

Drei Walzen 50, 52, 54 der bewegbaren Walzen 44 - 54 sind derart schwenkbar angelenkt, dass sie mittels eines Aktor (nicht gezeigt) aus der in Fig. 1 dargestellten Ballenbildungsposition in eine nach hinten und oben verschwenkte Ballenauswurfposition verbringbar sind.

Das Pressmittel 34 wird mittels nicht gezeigter Spannmittel fest an die drehend angetriebene, ortsfeste Walze 38 angelegt, dass seine Mitnahme gewährleistet ist. Auch die Walze 36 wird drehend angetrieben. Das Pressmittel 34 nimmt einen Anfangszustand ein, in dem es gerade gestreckt den Einlass 24 überbrückt, und einen Endzustand, in dem es sich wie dies in Figur 1 gezeigt wird, wie eine große Schlaufe um einen Pressballen 12 schlingt. Der Ballenpressraum 26 ist somit in seiner Größe veränderlich, d. h. sein Durchmesser nimmt mit der Größe des Pressballens 12 zu. Der Pressballen 12 befindet sich während seiner Bildung in dem Ballenpressraum 26 und wird von dem Pressmittel 34 größtenteils umschlungen, fällt aber aus dem Ballenpressraum 26 nach hinten auf den Untergrund 18, sobald die Walzen 50 - 54 zusammen mit einem rückwärtigen Gehäuseteil 56 verschwenken.

An dem rückwärtigen Gehäuseteil 56 ist darüber hinaus eine Umhüllungsvorrichtung 58 vorgesehen, die in an sich bekannter Weise ausgeführt ist, und die dazu geeignet ist, den Pressballen 12 mit einem Hüllmaterial 60 zu umhüllen. Das Hüllmaterial 60 ist auf einer Vorratsrolle 62 aufgerollt, welche im Innern 64 eines Gehäuses 66 aufgenommen wird, welches angrenzend an einen unteren Bereich 68 der Ballenpresse 12 an dem rückwärtigen Gehäuseteil 56 angebracht ist.

Die Umhüllungsvorrichtung 58 weist zwei Förderrollen 70, 72 auf, welche das Hüllmaterial 60 zumindest zu Beginn eines Umhüllungsvorgangs von der Vorratsrolle 62 abziehen. Den Förderrollen 70, 72 ist eine Trenneinrichtung 74 mit einem schwenkbar angebrachten Messer 76 nachgeordnet, welches nach Abschluss des Umhüllungsvorgangs mittels eines nicht gezeigten Aktors verschwenkt werden kann, um das den Pressmaterial umhüllende Hüllmaterial 60 von der Vorratsrolle 62 abzutrennen.

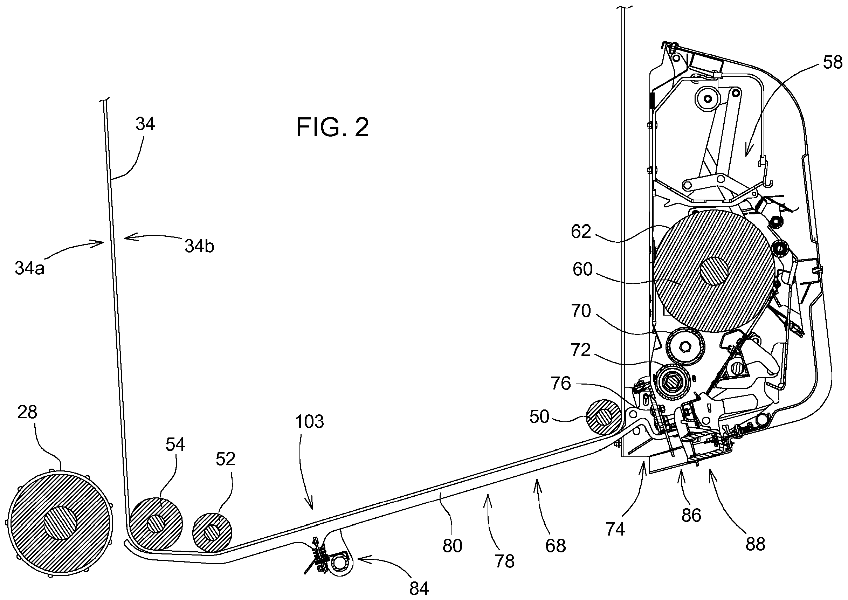

Angrenzend an die Umhüllungseinrichtung 58 ist in dem unteren Bereich 68 der Ballenpresse 10 unterhalb des Pressmittels 34 eine Leiteinrichtung 78 (siehe zum besseren Verständnis die vergrößerte Darstellung in Fig. 2) vorgesehen, die dazu beiträgt, das Hüllmaterial 60 an den Pressballen 12 heranzuführen, so dass das Hüllmaterial 60 durch den Pressballen 12 ergriffen werden kann, um diesen zu umhüllen.

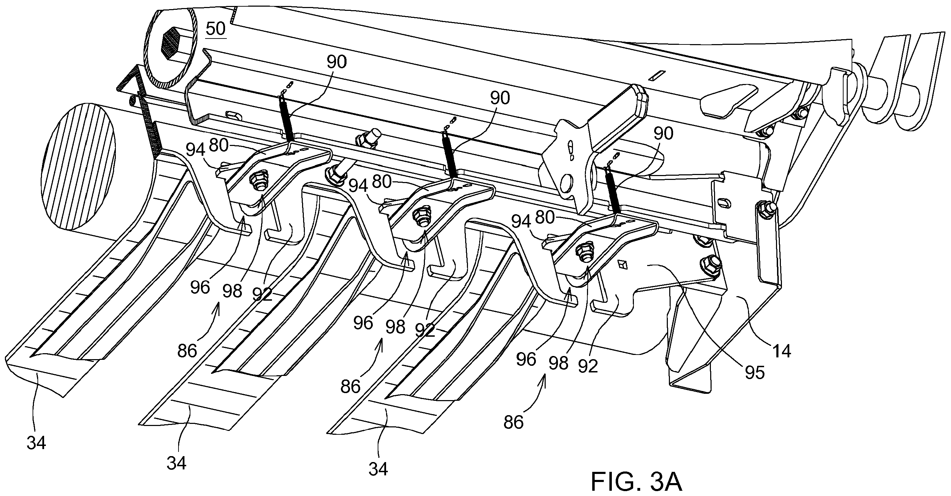

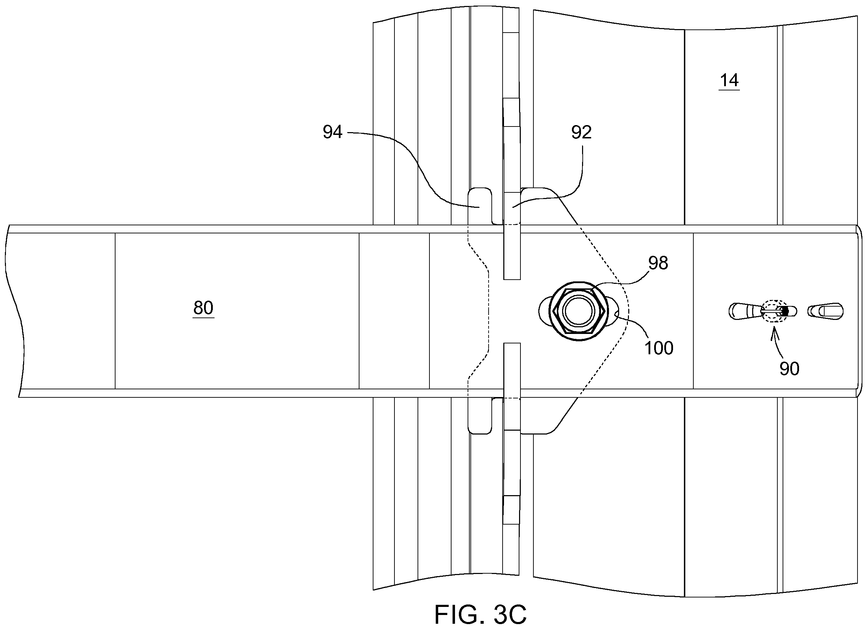

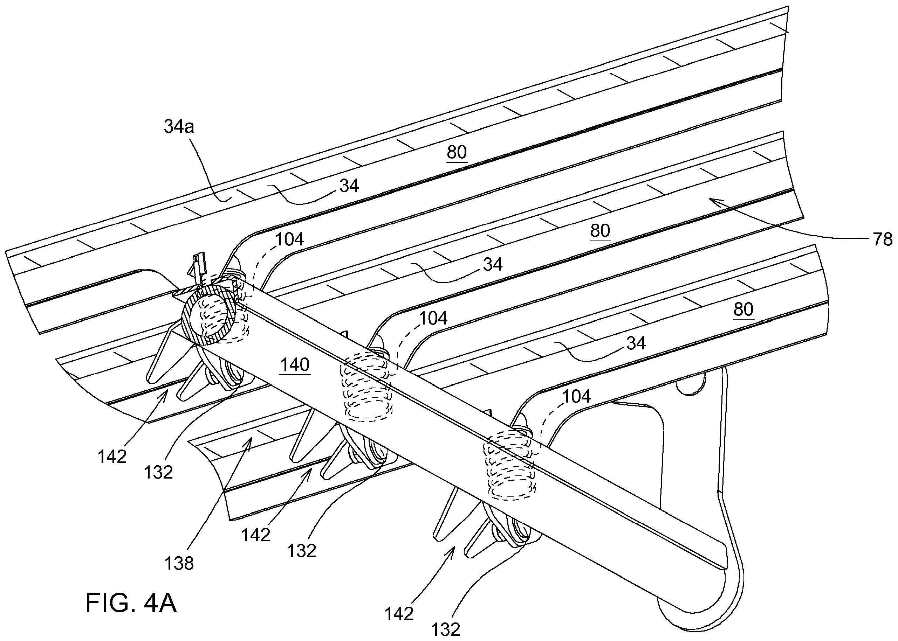

Es wird nun auch auf die Darstellung gemäß den Figuren 3a bis c und 4a bis c der Zeichnung Bezug genommen, gemäß der die Leiteinrichtung 78 mehrere Leitmittel 80 aufweist, welche etwa parallel zu einer Längsachse der Ballenpresse 10 angeordnet sind und sich im Wesentlichen in Richtung dieser Längsachse erstrecken.

Die Leitmittel 80 sind jeweils über ein bezogen auf die übliche Betriebsrichtung der Ballenpresse 10 vorderes Lagermittel 84 und ein rückwärtiges Lagermittel 86 an dem Rahmen 14 der Ballenpresse 10 angebracht. Die Lagermittel 84, 86 sind derart ausgebildet, dass sie die Leitmittel 80 federnd in Richtung des Pressmittel 34 belasten und darüber hinaus eine Führung der Lagermittel 84, 86 insbesondere in im Wesentlichen vertikaler Richtung bzw. in etwa senkrecht zu dem Pressmittel 34 zur Verfügung stellen.

Die Figuren 3a bis c zeigen einen rückwärtigen Bereich 88 der Leitmittel 78 in unterschiedlichen Perspektiven in vergrößerter Darstellung. Die Lagermittel 86 weisen jeweils ein Federmittel 90, ein Führungselement 92 und ein Führungsmittel 94 auf, wobei gemäß dem vorliegenden Ausführungsbeispiel die Führungselemente 92 mehrerer Lagermittel 86 einteilig ausgebildet bzw. in einen Führungsträger 95 integriert sind, der mit dem Rahmen 14 der Ballenpresse 10 verbunden, beispielsweise verschraubt ist. Dies vereinfacht die Herstellung, reduziert die Anzahl der Bauteil und kann die Stabilität verbessern. Es ist beispielsweise denkbar, dass die Führungselemente 92 in ein Blechteil integriert sind und/oder durch ein solches gebildet werden.

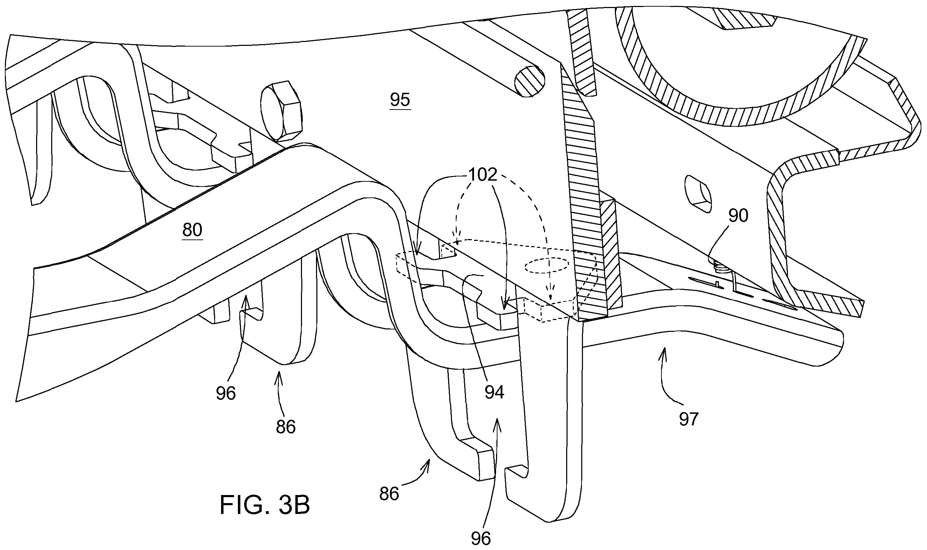

Das Führungselement 92 weist einen sich im Wesentlichen vertikal erstreckenden Führungsschlitz 96 auf, der das Führungsmittel 80 derart aufnimmt, dass sich dieses in dem Führungsschlitz 96 bezogen auf die Ballenpresse 10 nach oben bzw. unten bzw. allgemein auf und ab bewegen kann. Das Führungsmittel 94 ist an einem der Umhüllungsvorrichtung 58 zugewandten Endbereich 97 des Leitmittels 80 vorgesehen und über eine Schraubverbindung 98 in einem Langloch 100 in dem Leitmittel 80 in Längsrichtung des Leitmittels 80 verstellbar gelagert. Das Führungsmittel 94 weist Anschlagmittel 102 auf, welche mit dem Führungselement 92 zusammenwirken, um eine Bewegung des Leitmittels 80 in dem Führungsmittel 80 in Längsrichtung zu begrenzen. Zur Verdeutlichung wird in Figur 3b die nicht sichtbare Kontur der Anschlagmittel 102 in unterbrochenen Linien gezeigt.

Der Endbereich 97 des Leitmittels 80 ist darüber hinaus mit dem Rahmen 14 der Ballenpresse über das Federmittel 90 derart verbunden, dass das Federmittel 90 das Leitmittel 80 in Richtung des Pressmittels 34 belastet bzw. federnd vorspannt. Das Federmittel 90 ist gemäß dem vorliegenden Ausführungsbeispiel als eine Zugfeder ausgebildet.

Die Darstellung gemäß den Figuren 4a bis c zeigen in einem Mittenbereich 103 angeordnete Lagermittel 84 der Leiteinrichtung 78 vergrößert in unterschiedlichen Ansichten, wobei die vorderen Lagermittel 84 analog zu den rückwärtigen Lagermitteln 86 jeweils ein Federmittel 104 und ein Führungselement 106 aufweisen.

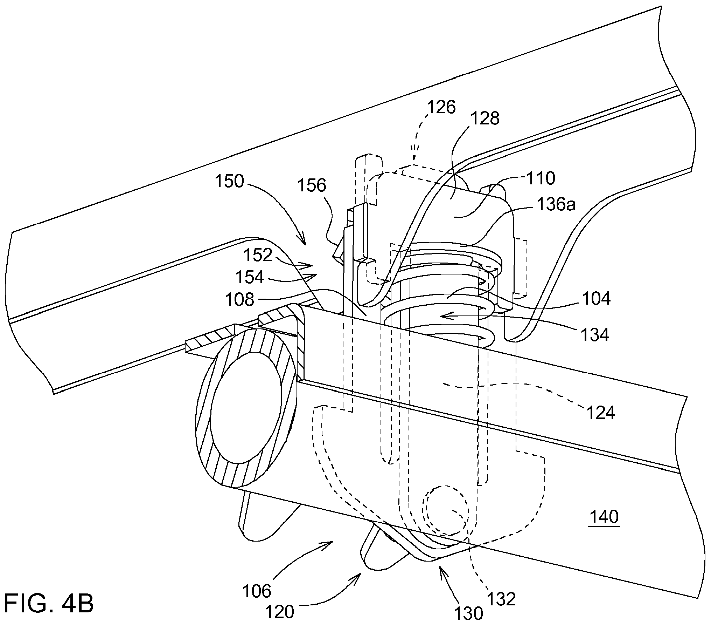

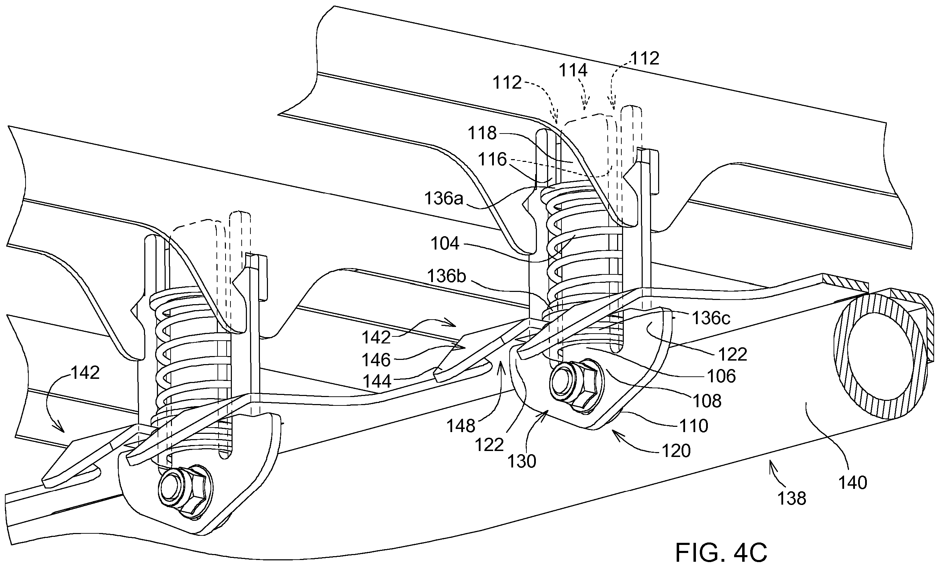

Das Führungselement 106 des zweiten Lagermittels 84 ist zweiteilig ausgebildet und weist ein erstes Schienenmittel 108 und ein zweites Schienenmittel 110 auf, wobei sowohl das erste Schienenmittel 108 als auch das zweite Schienenmittel 110, als im Wesentlichen flache, längliche Blechteile ausgebildet sind. In dem Schienenmittel 108 sind Führungsmittel 112 vorgesehen, die in der Art von zwei sich in Längsrichtung des Schienenmittels 108 erstreckenden und in einem ersten Endbereich 114 des Schienenmittels 108 geöffneten Längsschlitzen 116 ausgebildet sind, zwischen denen sich ein Mittelsteg 118 erstreckt. Angrenzend an einen dem ersten Endbereich 114 gegenüberliegenden Endbereich 120 sind Anschläge 122 vorgesehen. Zur Verdeutlichung wird in Figur 4b die nicht sichtbare Kontur des Schienenmittels 110 und in Figur 4c die nicht sichtbare Kontur des Schienenmittels 108 in unterbrochenen Linien dargestellt.

Das zweite Schienenmittel 110 weist einen schmalen, länglichen Mittelteil 124, dessen Breite der Breite des Mittelstegs 118 entspricht, einen ersten Endbereich 126, in dem ein verbreitertes Halteelement 128 vorgesehen ist, und einen zweiten, dem ersten Endbereich 126 gegenüberliegenden Endbereich 130 auf. Das erste und das zweite Schienenmittel 108, 110 sind in ihren zweiten Endbereichen 120, 130 über eine Schraubverbindung 132 fest verbunden, wobei das gemäß dem vorliegenden Ausführungsbeispiel in der Art einer Druckfeder ausgebildetes Federmittel 104 in den Längsschlitzen 116 aufgenommen wird, wobei sich der Mittelsteg 118 und das zweite Schienenmittel 110 im Inneren 134 des Federmittel 104 erstrecken. Beidenends des Federmittels 104 sind darüber hinaus als im Wesentlichen kreisförmige Scheiben ausgebildete Anschlagstücke 136 a, b, c vorgesehen.

Das Führungselement 106 wird im Betrieb einenends von einem Trägerelement 138 aufgenommen, welches fest mit dem Rahmen der Ballenpresse 14 verbunden ist. Das Trägerelement 138 weist einen Querträger 140 auf, an welchem mehrere Aufnahmemittel 142 zur Aufnahme jeweils eines Führungselements 106 vorgesehen sind. Die Aufnahmemittel 142 sind in der Art zweizinkiger Gabeln ausgebildet, zwischen deren Zinken 144 die Führungselemente 106 eingeführt werden können. Im montierten Zustand befinden sich die Anschläge 122 in Anlage mit einer Unterseite 146 der Zinken 144. Das zweite Anschlagstück 136b ist zwischen dem Federmittel 106 und einer Oberseite 148 der Zinken 144 vorgesehen und wird durch das Federmittel 106 in Anlage mit den Zinken 144 bzw. deren Oberseite 148 gehalten.

Andernends ist das Führungselement 106 des zweiten Lagermittels 84 in einem Anschlussbereich 150 des Leitmittels 80 aufgenommen. Hierzu weist der Anschlussbereich 150 ein Aussparung 152 auf, in die das Führungselement 106 bzw. die ersten Endbereiche 114,126 der Schienenmittel 108, 110 eingebracht und gesichert werden können. Hierzu weist die Aussparung 152 einen einenends offenen Schlitz 154 auf, der andernends in einer Erweiterung 156 zur Aufnahme des Halteelements 128 mündet.

Im Folgenden soll nun auf die Funktionsweise der zuvor beschriebenen Leiteinrichtung 78 genauer eingegangen werden. Nach Abschluss der Bildung eines Pressballens 12 in dem Pressraum 26 der Ballenpresse 10 wird mittels einer nicht gezeigten Steuereinrichtung die Umhüllungsvorrichtung 58 aktiviert, so dass diese Hüllmaterial 60 an den Pressballen 12 heranführt. Hierzu wird das Hüllmaterial 62 von der Förderrolle 70 von der Vorratsrolle 62 und mittels der zweiten Förderrolle 72 im Wesentlichen nach unten vorbei an der Trenneinrichtung zu der Leiteinrichtung 78 transportiert bzw. gefördert. Dort kommt das Hüllmaterial 60 in Anlage mit der Außenseite des Pressmittels 34, so dass es durch das Pressmittel 34 zwischen dem Pressmittel 34 bzw. dessen Außenseite 34a und der Leiteinrichtung 78 in Richtung des Pressballens 12 bzw. des Pressraums 26 gefördert wird.

Die Leiteinrichtung 78 bzw. die Leitmittel 80 halten des Hüllmaterial 60 dabei belastet durch die Wirkung der Federmittel 90 , 104 in Anlage mit dem Pressmittel 34 bzw. seiner Außenseite 34a, so dass es sicher und kontinuierlich in Richtung des Pressraums 26 bzw. des Pressballens 12 gefördert und diesem zwischen der von dem Pressmittel 34 umschlungenen Walze 54 und der unteren Rolle 28 zugeführt wird.

Haftet an dem Pressmittel 34 bzw. seiner Außenseite 34a beispielsweise eine Ansammlung von Erntegut oder anderem Material an, wie dies insbesondere bei ungünstigen, beispielsweise feuchten Erntebedingungen auftreten kann, oder gelangt anderes Material, Verunreinigungen, Steine, Erntegutklumpen oder ähnliches zwischen die Leiteinrichtung 78 und das Pressmittel 34 bzw. die Außenseite 34a des Pressmittels 34 und/oder das Hüllmaterial 60 bzw. zwischen das Hüllmaterial und das Pressmittel 34 bzw. die Außenseite 34a des Pressmittels 80, so verschieben sich das bzw. die entsprechenden Leitmittel 80, auf das/die Anhaftung bzw. das Material einwirkt, entsprechend in im wesentlichen vertikaler Richtung bzw. etwa senkrecht zu dem Pressmittel 34 in den jeweiligen Lagermitteln 84,86 gegen die Wirkung der Federmittel 90, 104, so das die Anhaftung/das Material eine Förderung des Hüllmaterials 60 nicht behindert und/oder einem Rückstau von Hüllmaterial 60 vorgebeugt werden kann. Die übrigen Pressmittel 80 halten das Hüllmaterial 60 weiter in Anlage mit dem Pressmittel 34 bzw. der Außenseite 34a des Pressmittels 34, so dass dieses das Hüllmaterial 60 weiter zumindest im Wesentlichen kontinuierlich in Richtung des Pressballens 12 bzw. des Pressraums 26 fördern bzw. transportieren kann.

Da sowohl in einem ersten, der Umhüllungsvorrichtung 58 zugewandten bzw. rückwärtigen Endbereich 97 des Leitmittels 80 als auch in einem Mittenbereich 103 jeweils ein Lagermittel 84, 96 angeordnet ist, kann sich in Abhängigkeit von der Menge bzw. der Dicke der Anhaftung bzw. des Materials das Leitmittel 80 in beiden Lagermitteln 84, 86 oder nur in einem der Lagermittel 84, 86 bewegen bzw. verschieben, so dass es gegebenenfalls nur bereichsweise von dem Pressmittel 34 bzw. der Außenseite 34a des Pressmittels 34 abgehoben wird und in seiner übrigen Erstreckung belastet von dem bzw. den Federmitteln 90, 104 das Hüllmaterial 60 in Anlage mit dem Pressmittel 34 bzw. seiner Außenseite hält, dieses leitet und/oder das Pressmittel 34 in der Förderung des Hüllmaterials 60 unterstützt.

Neben den Vorteilen im Betrieb bietet die gezeigte Leiteinrichtung 78 die Möglichkeit einer einfachen Montage und Demontage. Insbesondere muss beispielsweise zum Austausch oder um einem Zugang zu dem Pressmittel 34 bzw. der Außenseite 34a des Pressmittels 34 zu erlangen, um beispielsweise Verschmutzungen oder Verstopfungen oder Ansammlungen von Hüllmaterial 60 zu entfernen, nicht die gesamte Leiteinrichtung 78 demontiert werden. Vielmehr können einzelne Leitmittel 80 bzw. einzelne Lagermittel 84, 86 demontiert/montiert bzw. ersetzt werden.

Die Montage eines Leitmittels 80 wird dadurch vereinfacht, dass der rückwärtige Bereich 88 über dem Querträger 140 vorbei in den Führungsschlitz 96 des Führungselements 92 eines der rückwärtigen Lagermittel 86 eingeführt werden kann, und dort gehalten werde kann, ohne das hierzu eine zusätzliche Sicherung erforderlich ist. Dies erleichtert auch die Montage des Federmittels 90.

Eines der in dem Mittenbereich 103 angeordneten Lagermittel 84 kann zuerst an dem Leitmittel 80 angebracht werden, in dem das entsprechende Schienenmittel 110 bzw. das Halteelements 128 in die dem Schlitz 154 der Aussparung 152 eingeführt und weiter in die Erweiterung 156 eingebracht wird. Das weitere Schienenmittel 110, das Federmittel 104 und die Anschlagstücke 136a - c werden über die Verschraubung 132 mit dem Schienenmittel 110 verbunden. Sowohl das Schienenmittel 108 als auch das Schienenmittel 110 wird zwischen die Zinken 144 des Aufnahmemittels 142 eingeführt, und dort durch die Wirkung des Federmittels 104, der Anschlagmittel 136a - c und der Anschläge 122 gehalten.

## Patentansprüche

1. Landwirtschaftliche Ballenpresse (10) zur Bildung rundzylindrischer Pressballen (12), mit wenigstens einem Pressmittel (36), und einer Leiteinrichtung (78) mit wenigstens einem sich zumindest bereichsweise entlang des Pressmittels (34) erstreckenden Leitmittel (80) zum Heranführen eines Hüllmaterials (60) an das Pressmittel (34), wobei das Leitmittel (80) mit einem Rahmen (14) der Ballenpresse (10) einstellbar verbindbar ist, wobei das Leitmittel (80) über wenigstens zwei federnd vorgespannte Lagermittel (84, 86) an dem Rahmen (14) aufnehmbar ist, **dadurch gekennzeichnet, dass**
mehrere Leitmittel (80) vorgesehen sind, die unabhängig voneinander gelagert sind und/oder jeweils zwei Lagermittel (84, 86) aufweisen.

2. Ballenpresse nach Anspruch 1, **dadurch gekennzeichnet, dass** die Lagermittel (84, 86) zumindest bezogen auf eine Längsachse der Ballenpresse (12) und/oder eine Förderrichtung des Hüllmaterials (60) beabstandet sind.

3. Ballenpresse nach Anspruch 1 oder 2, **dadurch gekennzeichnet, dass** wenigstens eines der Lagermittel (84, 86) zumindest ein Federmittel (90 104) aufweist, welches in der Art einer Druckfeder und/oder Zugfeder ausgebildet ist.

4. Ballenpresse nach einem der vorherigen Ansprüche, **dadurch gekennzeichnet, dass** das/die Leitmittel (80) sich zumindest im Wesentlichen parallel zu einer/der Längsachse der Ballenpresse (10) und/oder zumindest im Wesentlichen in Richtung einer üblichen Förderrichtung des Hüllmaterials (60) erstreckt/en.

5. Ballenpresse nach einem der vorherigen Ansprüche, **dadurch gekennzeichnet, dass** wenigstens ein Führungselement (92, 106) zur Führung des/der Leitmittel(s) (80), insbesondere einer Führung zumindest im Wesentlichen in Vertikalrichtung bzw. senkrecht zu dem Pressmittel (34), vorgesehen ist.

6. Ballenpresse nach einem der vorherigen Ansprüche, **dadurch gekennzeichnet, dass** das/die Leitmittel (80) im Betrieb zumindest im Wesentlichen unterhalb des Pressballens (12) angeordnet ist/sind.

7. Ballenpresse nach einem der vorherigen Ansprüche, **dadurch gekennzeichnet, dass** das/die Leitmittel (80) das Hüllmaterial (60) an eine dem Pressballen (12) abgewandte Außenseite (34a) des Pressmittels (34) heranführt/heranführen und/oder dass das Hüllmaterial (60) einem Pressraum (26) der Ballenpresse (12) in einem einer Aufnahmevorrichtung (22) zugewandten Bereich des Pressraums (26) zwischen dem Pressmittel (34) und einer insbesondere stationären Rolle (28) an den Pressballen (12) herangeführt wird.

8. Ballenpresse nach einem der vorherigen Ansprüche, **dadurch gekennzeichnet, dass** das Pressmittel (34) als ein endloses Pressmittel insbesondere der Art eines/mehrerer, zumindest annähernd parallel zu einer Längsrichtung der Ballenpresse (12) umlaufenden/r Gurte/s ausgebildet ist.

## Claims

1. Agricultural baler (10) for forming round-cylindrical pressed bales (12), having at least one pressing means (36) and a guiding device (78) having at least one guiding means (80), extending at least regionally along the pressing means (34), for guiding a wrapping material (60) up to the pressing means (34), wherein the guiding means (80) is adjustably connectable to a frame (14) of the baler (10), wherein the guiding means (80) is receivable on the frame (14) via at least two resiliently preloaded bearing means (84, 86), **characterized in that**
a plurality of guiding means (80) are provided, which are mounted independently of one another and/or each have two bearing means (84, 86).

2. Baler according to Claim 1, **characterized in that** the bearing means (84, 86) are spaced apart at least with regard to a longitudinal axis of the baler (12) and/or a conveying direction of the wrapping material (60).

3. Baler according to Claim 1 or 2, **characterized in that** at least one of the bearing means (84, 86) has at least one spring means (90, 104), which is configured in the manner of a compression spring and/or tension spring.

4. Baler according to one of the preceding claims, **characterized in that** the one or more guiding means (80) extend(s) at least substantially parallel to a/the longitudinal axis of the baler (10) and/or at least substantially in the direction of a normal conveying direction of the wrapping material (60).

5. Baler according to one of the preceding claims, **characterized in that** at least one guide element (92, 106) for guiding the one or more guiding means (80), in particular for guiding at least substantially in a vertical direction or perpendicularly to the pressing means (34), is provided.

6. Baler according to one of the preceding claims, **characterized in that** the one or more guiding means (80) is/are arranged at least substantially beneath the pressed bale (12) during operation.

7. Baler according to one of the preceding claims, **characterized in that** the one or more guiding means (80) guide(s) the wrapping material (60) up to an outer side (34a), facing away from the pressed bale (12), of the pressing means (34), and/or **in that** the wrapping material (60) is guided up to the pressed bale (12) a pressing chamber (26) of the baler (12) in a region, facing a receiving apparatus (22), of the pressing chamber (26) between the pressing means (34) and an in particular stationary roller (28).

8. Baler according to one of the preceding claims, **characterized in that** the pressing means (34) is configured as an endless pressing means in particular in the manner of one or more belt(s) circulating at least approximately parallel to a longitudinal direction of the baler (12).

## Revendications

1. Presse à balles agricole (10) pour la formation de balles pressées cylindriques rondes (12), comprenant au moins un moyen de pression (36) et un appareil de direction (78), comprenant au moins un moyen de direction (80) s'étendant au moins en zones le long du moyen de pression (34) pour rapprocher un matériau d'enrobage (60) du moyen de pression (34), le moyen de direction (80) pouvant être relié de manière ajustable à un cadre (14) de la presse à balles (10), le moyen de direction (80) pouvant être reçu par l'intermédiaire d'au moins deux moyens de montage (84, 86) précontraints par ressort sur le cadre (14), **caractérisée en ce que**
plusieurs moyens de direction (80) sont prévus, qui sont montés indépendamment les uns des autres et/ou comprennent chacun deux moyens de montage (84, 86).

2. Presse à balles selon la revendication 1, **caractérisée en ce que** les moyens de montage (84, 86) sont espacés au moins par rapport à un axe longitudinal de la presse à balles (12) et/ou à une direction de transport du matériau d'enrobage (60).

3. Presse à balles selon la revendication 1 ou 2, **caractérisée en ce qu'**au moins un des moyens de montage (84, 86) comprend au moins un moyen de ressort (90, 104), qui est configuré à la façon d'un ressort de compression et/ou d'un ressort de traction.

4. Presse à balles selon l'une quelconque des revendications précédentes, **caractérisée en ce que** le ou les moyens de direction (80) s'étend ou s'étendent au moins essentiellement parallèlement à un des ou aux axes longitudinaux de la presse à balles (10) et/ou au moins essentiellement en direction d'une direction de transport usuelle du matériau d'enrobage (60).

5. Presse à balles selon l'une quelconque des revendications précédentes, **caractérisée en ce qu'**au moins un élément de guidage (92, 106) pour le guidage du ou des moyens de direction (80), notamment pour un guidage au moins essentiellement en direction verticale ou perpendiculairement au moyen de pression (34), est prévu.

6. Presse à balles selon l'une quelconque des revendications précédentes, **caractérisée en ce que** le ou les moyens de direction (80) est ou sont agencés pendant l'exploitation au moins essentiellement en dessous de la balle pressée (12).

7. Presse à balles selon l'une quelconque des revendications précédentes, **caractérisée en ce que** le ou les moyens de direction (80) rapproche ou rapprochent le matériau d'enrobage (60) d'un côté extérieur (34a) du moyen de pression (34) détourné de la balle pressée (12), et/ou **en ce que** le matériau d'enrobage (60) est rapproché de la balle pressée (12) une chambre de pression (26) de la presse à balles (12) dans une zone de la chambre de pression (26) tournée vers un dispositif de réception (22) entre le moyen de pression (34) et un cylindre (28) notamment stationnaire.

8. Presse à balles selon l'une quelconque des revendications précédentes, **caractérisée en ce que** le moyen de pression (34) est configuré sous la forme d'un moyen de pression sans fin, notamment à la façon d'une ou de plusieurs courroies circulant au moins approximativement parallèlement à une direction longitudinale de la presse à balles (12).
